# EUROPEAN PATENT APPLICATION

(11) **EP 1 010 740 A1**
(43) Date of publication of application: **21.06.2000**
(21) Application number: 99121360.4
(22) Date of filing: 26.10.1999
(51) Int. Cl.: C09K 5/20, C23F 11/12

(54) **Concentrated and diluted cooling liquid**

(30) Priority: 16.12.1998 CZ 416998
(71) Applicant: Setuza a.s., 401 29 Usti nad Labem (CZ)
(72) Inventor: Schwarz, Walter, Dr.-Ing., 400 11 Usti nad Labem (CZ); Kucera, Radomir, Ing., 403 31 Nestemice (CZ); Panoch, Miroslav, Dr., 511 01 Turnov (CZ); Marek, Vladislav, 250 88 Celakovice (CZ); Novak, Vladimir, 294 01 Bakov nad Jizerou (CZ)
(74) Representative: von Füner, Alexander, Prof.h.c. Dr.

(57) **Abstract**

Concentrated cooling liquid, generally for heat exchangers, particularly for cooling systems of combustion engines, gas compressors, cold-storage rooms systems, heat exchangers for utilization of solar power and similar applications, comprises 80 to 95 wt.% of glycerol, 1 to 12 wt.% of water, 2.0 to 5.0 wt.% of at least two additives selected of the group formed by corrosion inhibitors, stabilizing additives, additives for pH adjustment, improving additives and additives which prevent unintentional replacement for other liquids. Advantageously it comprises 1.5 to 3.5 wt.% of a corrosion inhibitor formed by an alkaline salt, advantageously the sodium salt of monocarboxylic and/or dicarboxylic acids C₆ to C₁₂, further it comprises an additive for pH adjustment formed by an alkaline salt, advantageously the sodium salt of glycerylboric acid in the quantity of 0.5 to 2 wt.%, or alkaline hydrogencarbonate, advantageously potassium hydrogencarbonate in the quantity of 0.1 to 1.0 wt %. It does not comprise any glycols, it is nontoxic and noncorrosive. The diluted cooling liquid further comprises demineralized, tap or drinking water in volume proportions of 1 part of the concentrated cooling liquid to 0.01 to 10 parts of water.

## Description

### Technical Field

The invention relates to a concentrated cooling liquid, generally for heat exchangers, e.g. cooling systems of combustion engines, gas compressors, cold-storage rooms, heat exchangers for utilization of solar power and similar applications, and a diluted cooling liquid for the same applications which require liquids of freezing points < 0 °C.

### Background Art

The task of cooling liquids in technical lines resides in excess heat removal, as in case of cooling of combustion engines, eventually heat exchange at its regeneration, as it is e.g. at heat exchangers. With respect to climatic conditions, due to alternating seasons of the year, it is necessary, for cooling liquids may stay in the liquid state even in winter at temperatures under the freezing point, in sections of the day when combustion engines are not in operation, or at applications as non-freezing mixtures. Another important property of cooling mixtures is protection of structural materials of cooling systems against corrosion. Not on the last place it is required that cooling liquids may be harmless with respect both to human health, i.e. they must not be poisonous, and to the environment, i.e. there must exist an easy biological degradability if they escape into the environment. The majority of known and applied cooling liquids is based on glycols, viz. particularly on ethylene glycol and propylene glycol. Ethylene glycol is a substance with a negative effect on the skin, and according to valid regulations, it is ranked amongst "other poisons". Propylene glycol is not considered as a poisonous substance. It is considered as a substance harmless from the environmental point of view, and biologically degradable. In the patent literature there are further described cooling and non-freezing liquids comprising, besides glycols, a certain quantity of glycerol, e.g. in US 5489391 or RU 2009158. A non-freezing cooling mixture for engines according to the published Patent Application SU 1551717 comprises 30 to 70 % of glycerol, and also an extract of cellulose in a solution of sodium carbonate and polymethyl siloxane, its pH is 13.5, freezing point -0.05 °C, boiling point 130 °C, alkaline reserve 18.5 to 35.5, it provides good anticorrosion protection for copper and brass, and the swelling value of rubber parts is only 0.067 to 0.6 %.

### Disclosure of Invention

The invention solves a composition of a concentrated and diluted cooling liquid based on glycerol, with a neutral or slightly alkaline pH value for the whole service life and with minimum environmental load. The concentrated cooling liquid according to the invention consists of 80 to 95 wt.% of glycerol, 1 to 12 wt.% of water, 2.0 to 5.0 wt.% of at least two additives selected of the group formed by corrosion inhibitors, stabilizing additives, additives for pH adjustment, improving additives and additives which prevent unintentional replacement for other liquids (colouring matters, bitter substances) . Concentrated cooling liquid may be diluted with water with respect to requirements of the particular application, typically in volume proportions of 1 part of the concentrated cooling liquid to 0.01 to 10 parts of water.

At one realization of the invention it is advantageous, if a concentrated cooling liquid comprises 80 to 95 wt.% of glycerol, 1 to 12 wt.% of water, 1.5 to 3.5 wt.% of a corrosion inhibitor formed by an alkaline salt, advantageously the sodium salt, of onocarboxylic and/or dicarboxylic acids C₆ to C₁₂, 0.5 to 2 wt.% of an additive for pH adjustment formed by an alkaline salt, advantageously the sodium salt of glycerylboric acid and 0.02 ± 0.01 wt.% of a stabilizing additive formed by benzotriazole.

At another realization of the invention it is advantageous, if a concentrated cooling liquid comprises 80 to 95 wt.% of glycerol, 1 to 12 wt.% of water, 1.5 to 3.5 wt.% of a corrosion inhibitor formed by an alkaline salt, advantageously the sodium salt, of monocarboxylic acid and/or dicarboxylic acids C₆ to C₁₂, 0.1 to 1.0 wt.% of an additive for pH treatment formed by an alkaline hydrogencarbonate, advantageously potassium hydrogencarbonate.

A diluted cooling liquid prepared from the concentrated cooling liquid according to the invention comprises also demineralized water, tap or drinking water in volume proportions of one part of the concentrated cooling liquid to 0.01 to 10 parts of water.

The concentrated cooling liquid according to the invention does not comprise any glycols, it is nontoxic and noncorrosive. It has a high value of thermal capacity and thermal conductivity, a low freezing point, and at low temperatures, a pasty mass arises which does not damage structural elements of a cooling system. The concentrated cooling liquid has also a high boiling point, it is nonflammable, it has a low viscosity at low temperatures, and its foaming is minimum. Its corrosive action upon structural materials of cooling systems is limited to minimum. It has a sufficient value of an alkaline reserve, securing a long-term efficiency (a long service life of the cooling system filling), pH in a neutral or slightly alkaline range stable within the whole service life of the cooling system filling (pH 8.0 to 8.5), the aggressiveness against to painted surfaces is minimum, the toxicity and irritability of mucous membranes and skin are low, it is odourless, it comprises bitter and coloured additives in order to prevent unintentional oral intake, it is biodegradable into harmless waste products, it is well miscible with other types of cooling liquids, it does not form any deposits even if it is mixed with hard water. Its price is advantageous, because it utilizes glycerol, regenerated from waste products of the fat industry.

As to all concentrated cooling liquids, there take place no changes of the mentioned parameters by adding improving additives, e.g. a silicone defoaming agent, colouring indication substances, e.g. rhodamine B and bitter taste indication additives, such as octaacetylsaccharose or denatonium benzoate in the quantity up to 0.2 wt.% .

Said concentrated cooling liquids and diluted cooling liquids are miscible without any limits with cooling liquids based on ethyleneglycol and propyleneglycol without losing their useful properties.

### Examples

### Example 1.

There was prepared a concentrated cooling liquid comprising

| | |
|---|---|
| glycerol | 85.71 wt. % |
| water | 9.93 wt. % |
| sodium salt of ethylcaproic acid | 1.96 wt. % |
| disodium salt of sebacic acid | 1.24 wt. % |
| sodium salt of glycerylboric acid | 1.14 wt. % |
| benzotriazole | 0.02 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 1, solder < 1, brass < 1, steel < 1, cast iron < 2, aluminium < 1.
Reserve alkalinity according to ASTM-D 1121, expressed as ml HCl, c = 0.1 mol/l: > 11.

### Example 2

There was prepared a concentrated cooling liquid comprising

| | |
|---|---|
| glycerol | 86.78 wt. % |
| water | 9.98 wt. % |
| sodium salt of ethylcaproic acid | 1.62 wt. % |
| disodium salt of sebacic acid | 1.26 wt. % |
| potassium hydrogencarbonate | 0.34 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 3, solder < 1, brass < 2,steel < 1, cast iron < 2, aluminium < 1.
Reserve alkalinity according to ASTM-D 1121, expressed as ml HCl, c = 0.1 mol/l:> 5.

### Example 3

There was prepared a concentrated cooling liquid comprising

| | |
|---|---|
| glycerol | 85.66 wt. % |
| water | 9.90 wt. % |
| sodium salt of caproic acid | 2.04 wt. % |
| disodium salt of sebacic acid | 1.22 wt. % |
| sodium salt of glycerylboric acid | 1.16 wt. % |
| benzotriazole | 0.02 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 2, solder < 2, brass < 2, steel < 1, cast iron < 2, aluminium < 2.
Reserve alkalinity according to ASTM-D 1121, expressed as ml HCl, c = 0.1 mol/l: > 11.

### Example 4

There was prepared a concentrated cooling liquid comprising

| | |
|---|---|
| glycerol | 85.95 wt. % |
| water | 9.78 wt. % |
| sodium salt of benzoic acid | 1.71 wt. % |
| disodium salt of azelaic acid | 1.02 wt. % |
| sodium salt of glycerylboric acid | 1.34 wt. % |
| benzotriazole | 0.02 wt. % |
| defoaming agent | 0.18 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 1, solder < 2, brass < 1, steel < 1, cast iron < 2, aluminium < 2.
Reserve alkalinity according to ASTM-D 1121, expressed as ml HCl, c = 0.1 mol/l: > 11.

### Example 5

There was prepared a concentrated cooling liquid comprising

| | |
|---|---|
| glycerol | 85.42 wt. % |
| water | 9.95 wt. % |
| sodium salt of benzoic acid | 1.36 wt. % |
| sodium salt of ethylcaproic acid | 1.69 wt. % |
| sodium salt of glycerylboric acid | 1.36 wt. % |
| benzotriazole | 0.02 wt. % |
| defoaming agent | 0.20 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 1, solder < 2, brass < 2, steel < 2, cast iron < 3, aluminium < 2.
Reserve alkalinity according to ASTM-D 1121, expressed as ml HCl, c = 0.1 mol/l: > 11.

### Example 6

There was prepared a concentrated cooling liquid comprising

| | |
|---|---|
| glycerol | 94.16 wt. % |
| water | 1.00 wt. % |
| sodium salt of ethylcaproic acid | 2.17 wt. % |
| disodium salt of sebacic acid | 1.38 wt. % |
| sodium salt of glycerylboric acid | 1.27 wt. % |
| benzotriazole | 0.02 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 1, solder < 1, brass < 1, steel < 1, cast iron < 2, aluminium < 1.

Reserve alkalinity according to ASTM-D 1121, expressed as ml HCl, c = 0.1 mol/l: > 12.

### Example 7

There was prepared a concentrated cooling liquid comprising

| | |
|---|---|
| glycerol | 94.00 wt. % |
| water | 1.00 wt. % |
| sodium salt of ethylcaproic acid | 2.15 wt. % |
| disodium salt of sebacic acid | 1.36 wt. % |
| sodium salt of glycerylboric acid | 1.27 wt. % |
| benzotriazole | 0.02 wt. % |
| silicone defoaming agent | 0.20 wt. % |

Into the finished product there were added:

| | |
|---|---|
| rhodamine B | 30 ppm |
| octaacetylsaccharose | 25 ppm |

Corrosion losses of weight according to ASTM D 1384-80, expressed in g/m²: copper < 1, solder < 1, brass < 1, steel < 1, cast iron < 2, aluminium < 1.
Reserve alkalinity according to ASTM-D 1121, expressed as ml HCl, c = 0.1 mol/l: > 12.

### Example 8

Diluted cooling liquids were prepared from concentrated cooling liquids when diluting them by means of demineralized, tap or drinking water in volume proportions expressed in volume parts, viz. concentrated cooling liquid : water = 1 : 1 and 1 : 2.5.

The cooling liquids had the following values:

| | pH | boiling point | freezing point |
|---|---|---|---|
| concentrated cooling liquid | | | |
| according to Examples 1 to 5 | - | 143 ± 1 °C | < - 42 °C |
| according to Examples 6 to 7 | - | > 200 °C | < - 20 °C |
| diluted cooling liquid 1:1 | 7.7-8.5 | 104 ± 1 °C | < - 32 °C |
| diluted cooling liquid 1:2.5 | 7.7-8.5 | 102 ± 1 °C | < - 10 °C |

Further measured characteristics of cooling liquids according to the invention:
Viscosity values at dilution 1 : 1 in mm².s⁻¹:

| | | | |
|---|---|---|---|
| at + 80 °C | 1.21 | at + 25 °C | 5.38 |
| at - 15 °C | 36.27 | at - 20 °C | 51.26 |
| at - 25 °C | 77.05 | at - 30 °C | unmeasurable |

Flash point: 138 °C
Values of biodegradability:

| | |
|---|---|
| specific COD_{CR} | 1020 mg/g |
| specific BOD₅ | 625 mg/g |
| BOD₅ : COD_{CR} | 0.61 |

Degree of degradation:
as a decrease of COD_{CR} 94 % ; rate after 24 hours = 9.2 mg/g/hr Action upon rubber:

| | |
|---|---|
| a) weight change | 0.28 % |
| b) volume change | 0.12 % |

Action upon an organic paint: without any attack

Foaming:

| | |
|---|---|
| a) foam volume | 33.3 ml |
| b) time of foam collapse | 1.5 s |
| c) water content | 1 % |

All mentioned characteristics correspond with requirements for the top quality cooling liquids required by foreign standards, e.g. (German) VW TL 774/D.

## Claims

1. Concentrated cooling liquid, generally for heat exchangers, particularly for cooling systems of combustion engines, gas compressors, cold-storage rooms systems, heat exchangers for utilization of solar power and similar applications **characterized** in that it comprises 80 to 95 wt.% of glycerol, 1 to 12 wt.% of water, 2.0 to 5.0 wt.% of at least two additives selected of the group formed by corrosion inhibitors, stabilizing additives, additives for pH adjustment, improving additives and additives preventing from unintentional replacement for other liquids.

2. Concentrated cooling liquid as in Claim 1, **wherein** there are comprised 80 to 95 wt.% of glycerol, 1 to 12 wt.% of water, 1.5 to 3.5 wt.% of a corrosion inhibitor formed by an alkaline salt, advantageously the sodium salt of monocarboxylic and/or dicarboxylic acids C₆ to C₁₂, 0.5 to 2 wt.% of an additive for pH adjustment formed by an alkaline salt, advantageously the sodium salt of glycerylboric acid and 0.02 ± 0.01 wt. % of a stabilizing additive formed by benzotriazole.

3. Concentrated cooling liquid as in Claim 1, **wherein** there are comprised 80 to 95 wt.% of glycerol, 1 to 12 wt.% of water, 1.5 to 3.5 wt.% of a corrosion inhibitor formed by an alkaline salt, advantageously the sodium salt of monocarboxylic and/or dicarboxylic acids C₆ to C₁₂, 0.1 to 1.0 wt.% of an additive for pH adjustment formed by an alkaline hydrogencarbonate, advantageously potassium hydrogencarbonate.

4. Diluted cooling liquid based on the concentrated cooling liquid as in Claims 2 or 3, **wherein** there is also comprised demineralized, tap or drinking water in volume proportions of one part of the concentrated cooling liquid to 0.01 to 10 parts of water.

5. Cooling liquid as in Claims 1 to 4, **wherein** there are comprised improving additives such as antifoaming agents, advantageously silicone agents, indicating colouring substances, advantageously rhodamine B, indicating taste compounds, advantageously bitter compounds, such as octaacetylsaccharose or denatonium benzoate in the quantities up to 0.2 wt.%.
